# EUROPÄISCHE PATENTSCHRIFT

(11) **EP 2 746 352 B1**
(45) Veröffentlichungstag und Bekanntmachung des Hinweises auf die Patenterteilung: **21.01.2015**
(21) Anmeldenummer: 12008476.9
(22) Anmeldetag: 20.12.2012
(51) Int. Cl.: C09D 133/08, C09D 133/10

(54) **Polymere Schutzschicht gegen Sauerstoff-Inhibierung bei der radikalischen Vernetzung von flüssigen Acrylaten oder Methacrylaten und Verfahren zur Herstellung derselben**
Polymeric protective layer against oxygen inhibition in the free-radical cross-linking of liquid acrylates or methacrylates and method for manufacturing the same
Couche de protection en polymère contre l'inhibition d'oxygène dans le cadre de la mise en réseau radicale d'acrylates ou de méthacrylates liquides et son procédé de fabrication

(43) Veröffentlichungstag der Anmeldung: 25.06.2014
(73) Patentinhaber: IOT - Innovative Oberflächentechnologie GmbH, 04318 Leipzig (DE)
(72) Erfinder: Mehnert, Reiner, 04416 Markkleeberg (DE); Schubert, Rolf, 04687 Trebsen (DE); Riedel, Carsten, 04416 Markkleeberg (DE)
(74) Vertreter: Köhler, Tobias

(56) Entgegenhaltungen:
- DE-A1-102007 034 877

## Beschreibung

Die Erfindung betrifft eine polymere Schutzschicht, die radikalisch vernetzende, strahlenhärtbare Lacke vor Sauerstoff-Inhibierung bei Vernetzung schützt und ein Verfahren zur Herstellung einer solchen polymeren Schutzschicht.

Es ist bekannt, dass die durch Radikale ausgelöste Vernetzung von strahlenhärtbaren Lacken auf der Basis von Acrylaten und Methacrylaten durch Kontakt mit Sauerstoff inhibiert wird. R.Mehnert, I.Janovsky, A.Pincus: UV&EB Curing Technology and Equipment, Wiley-SITA, London 1998

Ein Teil der durch Strahlung in der flüssigen Matrix erzeugten Radikale reagieren in einer Konkurrenzreaktion zur Vernetzung mit Sauerstoff. Vor allem in der Anfangsphase der Vernetzung, wenn die Lackmatrix noch niedrigviskos ist, diffundiert noch Sauerstoff aus der Luft in die zu härtende Schicht. Dabei konkurriert dieser effizient mit der Vernetzungsreaktion um die durch UV-Bestrahlung entstehenden Radikale.

Als Folge der Inhibierung wird die Oberfläche der Beschichtung nicht vollständig vernetzt. Die Brutto-Geschwindigkeitskonstante der Vernetzung sinkt durch die Sauerstoff-Konkurrenzreaktion und die Molekulargewichtsverteilung des vernetzten Polymeren wird zu niedrigeren Molekulargewichten verschoben, d.h. Oberflächeneigenschaften der gehärteten Beschichtung wie Kratz- und Abriebbeständigkeit sowie Chemikalienbeständigkeit werden negativ beeinflusst.

Es ist deshalb technisch vorteilhaft, die Inhibierung der Vernetzung durch Sauerstoff zu vermeiden bzw. stark zu verringern.
Die unerwünschte Konkurrenzreaktion durch Sauerstoff kann durch folgende Maßnahmen, die dem Stand der Technik entsprechen, unterdrückt werden:

Die Dosisleistung der Bestrahlungsquelle und die Konzentration von Photoinitiatoren in der Lackformulierung werden so erhöht, dass trotz der Konkurrenzreaktion mit Sauerstoff genügend Radikale zur Verfügung stehen, um die Vernetzung auszulösen und zu Ende zu führen.
Die zur UV-Härtung erforderliche Dosis - und damit der Energieaufwand - beträgt unter diesen Umständen ca. das Dreifache der Dosis, die bei Vermeidung der Inhibierung erforderlich ist.
Nicht chemisch umgesetzte Reste von Photoinitiatoren führen zu unerwünschten Nachreaktionen wie Vergilbung und Abbau des Polymeren sowie zu erhöhter Migration flüchtiger organischer Verbindungen aus der Beschichtung.

Die Bestrahlung wird in inerter Atmosphäre - z.B. unter Schutzgas wie Stickstoff - durchgeführt. Für eine ausreichende Minimierung der Konkurrenzreaktion mit Sauerstoff wird die Sauerstoff-Restkonzentration auf < 1000 ppm gesenkt.

Die flüssige Matrix wird durch eine auf die Oberfläche kaschierte, UVtransparente Folie abgedeckt. Die Bestrahlung erfolgt durch die Folie. Es reagiert nur der in der flüssigen Matrix gelöste Sauerstoff in Konkurrenz zur Vernetzung. Die Folie verhindert eine schnelle Nachdiffusion von Sauerstoff aus der Luft. Der Einfluss der Konkurrenzreaktion wird damit stark reduziert. Die Folienkaschierung erfordert jedoch einen weiteren Prozessschritt und erzeugt zusätzliche Kosten.

Aufgabe der vorliegenden Erfindung ist es, ein Verfahren zu entwickeln, das zur Vermeidung der Sauerstoff-Inhibierung der radikalischen Vernetzung von strahlenhärtbaren Lacken auf der Basis von Acrylaten und Methacrylaten eingesetzt werden kann, indem zunächst die flüssige Beschichtung mittels VUV-Bestrahlung nur im Oberflächenbereich bis zu Eindringtiefen von einigen Hundert Nanometern vernetzt und damit in den festen Zustand überführt wird. Dieser Prozessschritt der wird von der nachfolgenden UV-Durchhärtung zeitlich und räumlich getrennt.

Die vernetzte, feste Oberflächenschicht übernimmt den Schutz vor Sauerstoff-Inhibierung der darunter befindlichen noch flüssigen Acrylatschicht. Sie wirkt in dieser Hinsicht wie eine Kaschierfolie, wird jedoch in situ durch VUV-Bestrahlung im Oberflächenbereich der flüssigen Beschichtung erzeugt. Die feste Oberflächenschicht ist UVdurchlässig und kann mit üblichen UV-Strahlern oder auch mit Elektronenstrahlern durchgehärtet werden. Die bereits feste Oberlächenschicht wird hierbei nicht beschädigt, sondern lediglich nachvernetzt.

Diese Aufgabe wird durch die erfindungsgemäße Lösung gemäß den Patentansprüchen 1 bis 4 gelöst und soll nachfolgend anhand von Ausführungsbeispielen näher erläutert werden.

Überraschend wurde gefunden, dass eine Sauerstoff-Inhibierung der Vernetzung von Acrylaten oder Methacrylaten durch Vorbestrahlung der flüssigen Matrix mit Photonen von Wellenlängen zwischen 100 und 230 nm, wie sie z.B. von Argon-, Xenon- oder Excimerstrahlern erzeugt werden, unter den nachfolgend beschriebenen Bedingungen vermieden werden kann.
Photonen dieser Wellenlängen dringen in flüssige Acrylate oder Methacrylate nur wenige zehn bis hundert Nanometer ein. Die Energie der Photonen ist ausreichend, um in dieser dünnen Schicht direkt Radikale zur Auslösung der Vernetzung zu erzeugen. Als Folge entsteht eine sehr dünne, vernetzte Polyacrylat/-methacrylat-Schicht, die für die darunter befindliche Flüssigkeit wie eine Polymerfolie wirkt, die die Nachdiffusion von Sauerstoff vor und während der UV-Durchhärtung verhindert. Die außerhalb der Eindringtiefe der Excimer-Photonen verbleibende flüssige Lackmatrix wird zwischen dem festen Substrat und der durch Excimer-Bestrahlung entstandenen Polymerschicht der Oberfläche eingeschlossen. Es entsteht eine Sandwich-Struktur aus Substrat, flüssiger Lackmatrix und Polymerschicht.
Diese Struktur ist zeitlich sehr stabil und gegen Sauerstoff-Diffusion geschützt. Sie kann sowohl unmittelbar nach ihrer Entstehung als auch nach längerer Lagerzeit durch UV-Bestrahlung in eine feste Beschichtung überführt werden.

Die räumliche Trennung der Prozessschritte Vermeidung von Sauerstoff-Inhibierung und UV-Vernetzung der Lackschicht ist vor allem dann von Vorteil, wenn die im Prozess folgende UV- Bestrahlungsanlage zur Durchhärtung nicht unter Inertgas betrieben werden kann oder soll.

Die Herstellung einer gegen Sauerstoff-Inhibierung geschützten Sandwich-Struktur ermöglicht in vorteilhafter Weise die Trennung der Prozessschritte der UV-Härtung in
Teilschritt 1: Schutz gegen Sauerstoff-Inhibierung
   und
Teilschritt 2: UV- Durchhärtung der flüssigen Matrix ohne Sauerstoff-Inhibierung.
Um die schützende Polymerschicht zu erzeugen, werden Photonen eines Argon-Excimerstrahlers mit einem Maximum des Emissionsbands bei 126 nm, oder eines Xenon-Excimerstrahlers mit einem Emissionsmaximum bei 172 nm - (VUV-Excimerstrahler) genutzt.
B.Eliasson and U.Kogelschatz, UV Excimer Radiation for Dielectric-Barrier Discharges, Appl.Phys.B 46, 299-303 (1988)
C. Elsner, M. Lenk, L. Prager, R. Mehnert, Windowless argon excimer source for surface modification, Appl. Surf. Sci. 252 (2006) 3616-3624.
R. Mehnert and M. Lenk, EP 1050395 A2 (2000)*.*
Die auf einem festen Substrat aufgetragene Lackschicht mit typischen Schichtdicken zwischen 2 und 100 µm wird in einer Bestrahlungskammer, die entweder mit Argon oder mit Stickstoff geflutet wird, bei einer Restsauerstoff-Konzentration < 1000 ppm - vorzugsweise < 100 ppm - mit Photonen eines VUV-Excimerstrahlers bestrahlt.

Als Folge der Bestrahlung entsteht die erfindungsgemäße Sandwich-Struktur mit der Schichtfolge festes Substrat, flüssiger Lack, feste polymere Schutzschicht. Die Schutzwirkung gegen eine schnelle Nachdiffusion von Sauerstoff in die flüssige Schicht übernehmen das feste Substrat von unten und die erzeugte Polymerschicht an der Oberfläche.

Eine Durchvernetzung der Lackmatrix mit UV- Strahlern wird nicht mehr durch Sauerstoff inhibiert und kann deshalb zu einem späteren Zeitpunkt erfolgen.
Je nach Zusammensetzung der Lackmatrix ist die auf der Oberfläche entstehende Polymerschicht glatt oder strukturiert.
Oberflächen mit Strukturen zwischen 0,5 und 5 µm entstehen vor allem dann, wenn Acrylate/Methacrylate verwendet werden, die bei Vernetzung stark schrumpfen. Diese Oberflächen zeigen eine diffuse Reflexion von Licht und erlauben als Nebeneffekt die Herstellung von Oberflächen mit Glanzgraden (bei 60°) von 1 bis 25. Die Verhinderung von Sauerstoffinhibierung bei der UV-Härtung der Lackmatrix durch eine Sandwich-Struktur hat bei der Herstellung matt erscheinender, mikrostrukturierten Oberflächen nach dem Stand der Technik den Vorteil, dass die die UV-Durchhärtung der noch flüssigen Lackschicht in der Sandwich-Struktur ohne störende Sauerstoff-Inhibierung sowohl an Luft als auch zeitlich stark verzögert erfolgen kann, während bisher Excimerbestrahlung der Lackschicht und UV-Durchhärtung in unmittelbarer zeitlicher Folge beim Durchlaufen einer gemeinsamen, mit Stickstoff inertisierten Bestrahlungskammer erfolgen.
F. Bauer et al. "UV curing and matting of acrylate nanocomposite coatings by 172 nm excimer irradiation", Progress in Organic Coatings, Vol. 60, Nr.2, 1.September 2007, Seiten 121 -12

Sandwich-Strukturen werden vorteilhaft bei der UV-Härtung von Lacken auf Substraten wie Holz- oder Holzwerkstoffen, Papier, Finishfolien, Hart- und Weich- PVC, Linoleum, Faserzementplatten, Metallbändern oder -platten, Kunststofffolien, Keramikplatten, Natursteinplatten etc. verwendet.

### Beispiel 1

Hergestellt wird eine Acrylat-Lackformulierung A bestehend aus:
80g Urethanacrylat Silica Nanokomposit 315 M9 der Fa. Cetelon-Nanotechnik, Leipzig
18g Reaktivverdünner Hexandioldiacrylat (HDDA)
2 g Photoinitiator DC 1173

Diese Formulierung wird auf bedruckte Finishfolie mit einem Rakel aufgetragen. Die Schichtdicke beträgt 15 g/m². Die UV-Härtung erfolgt nach folgenden Regimes:
Regime a: Stand der Technik
   Bestrahlung der beschichteten Finishfolie im Durchlauf auf einer Bandanlage in einer mit Sickstoff inertisierten, Behandlungskammer mit 172nm-Excimer-Vorbestrahlung mit einer Dosis von 2 mJ/cm² und unmittelbar nachfolgender Durchhärtung mit einer Mitteldruck-Quecksilber-Lampe einer elektrischen Leistung von 120 W/cm mit einer Dosis von 700 mJ/cm².
Regime b: Erfindungsgemäße Lösung
   Bestrahlung der mit Formulierung A beschichteten Finishfolie mit einem 172 nm Excimerstahler unter Stickstoffatmosphäre mit einer Dosis von 2 mJ/cm². Lagerung der entstandenen Sandwich-Folie an Luft für ca. 30 min als aufgewickelte Rolle. Danach Einlegen der Rolle in die Abwicklung einer Rolle-zu Rolle- UV-Bestrahlungsanlage und Durchhärtung der Sandwich- Folie während des Durchlaufens der Bestrahlungszone einer 120 W/cm Quecksilber-Mitteldruck-Lampe an Luft. Bestrahlungsdosis 700 mJ/cm².

Eine Zusammenstellung von Messwerten zu Oberflächeneigenschaften der nach Regime a und Regime b hergestellten Beschichtungen enthält Tabelle 1

**Tabelle 1**

| **Eigenschaft** | **Beschichtung nach Regime a Stand der Technik** | **Beschichtung nach Regime b Erfindungsgemäße Lösung** | |
|---|---|---|---|
| Chemikalienbeständigkeit der Oberfläche nach DIN/EN 68861 | Beanspruchungsgruppe 1B erfüllt | Beanspruchungsgruppe 1A erfüllt | |
| Mikrokratzbeständigkeit (Martindale-Test) gemäß IHD-W-445 | Glanzänderung 5% | Glanzänderung 4% | |
| Abriebfestigkeit gemäß IHD-W-461 | Klasse 3 | Klasse 3 | |
| Glanzgrad bei 60° | 5 | 6 | |

### Ergebnisse bzgl. Beispiel 1

In Tabelle1 werden Oberflächeneigenschaften verglichen, die stark durch Sauerstoff-Inhibierung beeinflusst werden:
Da durch Sauerstoff-Inhibierung die Vernetzungsdichte an der Oberfläche der Beschichtung herabgesetzt wird, erwartet man bei Inhibierung eine Verschlechterung der Chemikalienbeständigkeit, der Mikrokratzbeständigkeit und der Abriebbeständigkeit. Schwankungen des Glanzgrades werden z.B. bei Veränderung der Oberflächentopologie durch die Lagerung des Sandwiches erwartet.
Wie in Tabelle 1 zusammengefasst, sind die Oberflächeneigenschaften einer Beschichtung, die über eine Sandwich-Struktur hergestellt wird, gleich oder höherwertig als die nach dem Stand der Technik erreichten Eigenschaften.

### Beispiel 2

Hergestellt wird eine Acrylat-Lackformulierung B bestehend aus:
80 g Pentaerythritoltriacrylat (PETIA)
18 g Polyesteracrylat Ebecryl 81
2 g Photoinitiator DC 1173
Die Formulierung B wird auf bedrucktes heterogenes PVC mit einem Rakel aufgetragen. Die Schichtdicke beträgt 15 g/m².

Die UV-Härtung erfolgt nach folgenden Regimes

### Regime a: Stand der Technik

Bestrahlung der beschichteten PVC-Platten im Durchlauf auf einer Bandanlage in einer mit Sickstoff inertisierten, Behandlungskammer mit 172nm-Excimer-Vorbestrahlung mit einer Dosis von 2 mJ/cm² und unmittelbar nachfolgender Durchhärtung mit einer Mitteldruck-Quecksilber-Lampe einer elektrischen Leistung von 120 W/cm mit einer Dosis von 700 mJ/cm².

>

### Regime b: Erfindungsgemäße Lösung

Bestrahlung der mit Formulierung B beschichteten PVC-Platten mit einem 172 nm Excimerstahler unter Stickstoffatmosphäre mit einer Dosis von 2 ml/cm2. Lagerung der entstandenen Sandwich-Folie an Luft für ca. 30 min. Danach Durchhärtung der Sandwich- Folie während des Durchlaufens der Bestrahlungszone einer 120 W/cm Quecksilber-Mitteldruck-Lampe an Luft. Bestrahlungsdosis 700 mJ/cm².

Eine Zusammenstellung von Messwerten zu Oberflächeneigenschaften der nach Regime a und Regime b hergestellten Beschichtungen enthält Tabelle 2.

**Tabelle 2**

| **Eigenschaft** | **Beschichtung nach Regime a Stand der Technik** | **Beschichtung nach Regime b Erfindungsgemäße Lösung** |
|---|---|---|
| Chemikalienbeständigke it der Oberfläche nach DIN/EN 68861 | Beanspruchungsgrupp e 1B erfüllt | Beanspruchungsgrupp e 1B erfüllt |
| Mikrokratzbeständigkeit (Martindale-Test) gemäß IHD-W-445 | Glanzänderung 15% | Glanzänderung 13% |
| Abriebfestigkeit gemäß IHD-W-461 | Klasse 2 | Klasse 2 |
| Glanzgrad bei 60° | 75 | 70 |

### Ergebnisse bzgl. Beispiel 2

Wie in Tabelle 2 zusammengefasst, sind die Oberflächeneigenschaften einer Beschichtung, die über eine Sandwich-Struktur hergestellt wird, gleich oder höherwertig als die nach dem Stand der Technik erreichten Eigenschaften. Die Beschichtung mit Formulierung B zeigt keine Mikrostrukturierung bei Excimer- und UV-Bestrahlung.

## Patentansprüche

1. Polymere Oberflächen-Schutzschicht auf einer Sandwichstruktur, bestehend aus einem festen Substrat, einer flüssigen Lackschicht auf Acrylat- und/oder Methacrylat-Basis, aus welcher durch Vernetzung eine dünne feste Oberflächen- Polymerschicht erzeugt wird, **dadurch gekennzeichnet, dass** die flüssige Lackschicht bei Anwesenheit dieser Schutzschicht ohne störende Sauerstoffinhibierung mittels UV-Bestrahlung in einem Wellenlängenbereich von 100 bis 230 nm zu vernetzen ist. und dass die Vernetzung des flüssigen Lacks unabhängig von der Herstellung des Sandwiches und zeitlich verzögert dazu erfolgt.

2. Polymere Oberflächen-Schutzschicht auf einer Sandwichstruktur nach Anspruch 1, **dadurch gekennzeichnet, dass** die Polymere Oberflächen-Schutzschicht eine Mikrostrukturierung aufweist.

3. Verfahren zur Herstellung einer polymeren Oberflächen-Schutzschicht auf einer Sandwichstruktur bestehend aus einem festen Substrat, einer flüssigen Lackschicht auf Acrylat- und/oder Methacrylat-Basis, aus welcher durch Vernetzung eine dünne feste Oberflächen- Polymerschicht erzeugt wird, **dadurch gekennzeichnet, dass** die die Oberfläche bildende Lackschicht durch Bestrahlung mit Argon-, Xenon-oder Kryptonchlorid-Excimerstrahlern mit Photonen von 100 bis 230 nm vernetzt wird und in eine feste Polyacrylat/ Polymetacrylat- Oberflächenschicht umgewandelt wird.

4. Verfahren nach Anspruch 3, **dadurch gekennzeichnet, dass** die Excimerbestrahlung bei Bestrahlungszeiten von 0,01 bis 100 s, vorzugsweise von 0,05 bis 50, besonders vorzugsweise von 0, 1 bis 5 s erfolgt.

## Claims

1. Polymeric surface protective layer on a sandwich structure consisting of a solid substrate, a liquid acrylate and / or methacrylate based coating layer, from which through cross-linking a thin, solid surface polymer layer is generated, **characterized by** the liquid coating layer in the presence of this protective layer being cross-linked without the interference of oxygen inhibition by UV irradiation in a wavelength range of 100-230 nm, and that the cross-linking of the liquid coating takes place independent of the sandwich production and with a time delay.

2. Polymeric surface protective layer on a sandwich structure according to Claim 1, **characterized by** the polymer surface protective layer exhibiting a microstructure.

3. A process for creating a polymeric surface protective layer on a sandwich structure consisting of a solid substrate, a liquid acrylate and / or methacrylate based coating layer, from which through cross-linking a thin, solid surface polymer layer is generated, **characterized by** the surface-forming coating layer being cross-linked by irradiation with argon, xenon or cryptographic chloride excimer lamps with photons between 100-230 nm and being converted into a solid polyacrylate / polymethacrylate surface layer.

4. A method according to Claim 3, **characterized by** the excimer irradiation being carried out at exposure times of 0.01 to 100 s, preferably from 0.05 to 50, more preferably from 0.1 to 5 s.

## Revendications

1. Couche protectrice polymère en structure sandwich pour surfaces, composée d'un substrat solide, d'une couche de laque liquide à base d' acrylate et/ou méthacrylate, à partir de laquelle une couche polymère fine et solide pour surfaces s'est formée, se **caractérise par le fait que** la couche de laque liquide réticule en présence de cette couche protectrice, sans inhibition d'oxygène gênante et au moyen du rayonnement UV, dans un domaine de longueur d'onde de 100 à 300 nm. La réticulation de la laque liquide est indépendante de la fabrication du sandwich et est de plus temporaire.

2. Couche protectrice polymère en structure sandwich pour surfaces selon la revendication 1, se caractérise du fait que la couche protectrice polymère pour surfaces dispose d'une microstructuration.

3. Procédé de fabrication d'une couche protectrice polymère en structure sandwich pour surfaces, composée d'un substrat solide, d'une couche de laque liquide à base d' acrylate et/ou méthacrylate, à partir de laquelle une couche polymère fines et solides pour surfaces s'est formée, se **caractérise par le fait que** la couche de laque, formant la surface, réticule au moyen d'un rayonnement avec des rayons excimer d'argon, de xénon ou de chlorure de krypton, avec des photons allant de 100 à 230 nm, et se transforme en une couche solide en polyacrylate/ polymetacrylate pour surfaces.

4. Procédé selon la revendication 3, se **caractérise par le fait que** le rayonnement excimer est réalisée dans des temps allant de 0,01 à 100 s, de préférence de 0,05 à 50, spécialement de préférence de 0,1 à 5.
